# FASCICULE DE BREVET EUROPEEN

(11) **EP 0 511 135 B1**
(45) Date de publication et mention de la délivrance du brevet: **06.09.1995**
(21) Numéro de dépôt: 92420137.9
(22) Date de dépôt: 23.04.1992
(51) Int. Cl.: B60C 23/00

(54) **Dispositif pneumatique piloté de gonflage-dégonflage automatique et de mesure de pression d'une capacité de confinement d'un fluide gazeux sous pression relative**
Steuerventil für eine Anlage zum automatischen Auffüllen und Entleeren eines Behäters, in dem ein Gas unter Druck steht, insbesondere eines Kraftfahrzeugreifens.
Pneumatic regulation device for the automatic inflation/deflation and the measurement of pressure within a closed volume of gaseous fluid under relative pressure (e.g. a tyre)

(30) Priorité: 23.04.1991 FR 9105351
(43) Date de publication de la demande: 28.10.1992
(73) Titulaire: Fazekas, Stéphane, F-42640 Saint Germain Lespinasse (FR)
(72) Inventeur: Fazekas, Stéphane, F-42640 Saint Germain Lespinasse (FR)
(74) Mandataire: Ropital-Bonvarlet, Claude

(56) Documents cités:
- DE-C- 920 649
- GB-A- 2 234 801
- US-A- 2 944 579
- US-A- 4 765 385

## Description

La présente invention concerne le domaine technique du contrôle à distance du gonflage ou du dégonflage d'une capacité, à partir d'un fluide gazeux sous pression relative, et elle vise, plus particulièrement, le contrôle à distance du gonflage du pneumatique d'une roue de véhicule automobile.

Dans le domaine d'application préféré ci-dessus, on sait qu'il est parfois utile de pouvoir contrôler à distance la pression de gonflage des pneumatiques des roues d'un véhicule, de manière à pouvoir adapter la portance de ces derniers en fonction de l'état du sol sur lequel le véhicule se déplace.

Ceci est, en particulier, le cas des véhicules tous terrains qui doivent pouvoir progresser dans les meilleures conditions, indifféremment, sur des sols durs, caillouteux, meubles, se succédant, sans que le conducteur soit astreint à interrompre la progression pour apporter, de façon manuelle et lorsque le véhicule est à l'arrêt, une correction appropriée de la pression de gonflage des différents pneumatiques.

Cette application n'est donnée qu'à titre d'exemple car, dans de nombreux domaines, il s'avère également utile, sinon nécessaire, de pouvoir adapter à distance la pression de gonflage d'une capacité quelconque de confinement d'un fluide gazeux sous pression relative.

Pour résoudre le problème ci-dessus, la technique antérieure offre quelques solutions.

L'une d'elles, divulguée par le brevet **FR 1 563 179,** comprend un clapet capable, dans une position de repos, de fermer un circuit de circulation entre la capacité et une source de fourniture d'un fluide sous pression disponible.

Dans le cas où il est souhaité procéder au gonflage de la capacité, le clapet est commandé contre l'action d'un ressort de rappel, de manière à ouvrir le circuit de circulation.

Dans le cas où il est souhaité procéder à un dégonflage partiel de la capacité, un fluide sous pression est appliqué pour soulever le clapet et la source de fourniture de fluide est isolée pour maintenir le clapet ouvert pendant le temps nécessaire pour produire une décompression lente par l'intermédiaire d'un détendeur.

Une telle installation nécessite un circuit de pilotage à distance compliqué et qui devient encore plus complexe lorsqu'il est nécessaire de pouvoir piloter à distance une ou plusieurs capacités, comme cela est le cas dans l'application aux véhicules automobiles.

Outre cet inconvénient, il convient de noter que l'opération de dégonflage implique un temps de transit relativement important, impliquant une installation pilotée à distance par un circuit de commande logique cher et fragile.

La proposition ci-dessus n'apparait pas satisfaisante dans l'application aux véhicules automobiles, étant donné que chaque roue, constituant une capacité, doit être isolée de l'installation de pilotage par un joint tournant qui travaille sous forte pression pendant toute la durée de la phase de dégonflage.

Un tel joint tournant est donc sollicité de façon intense, à la fois en rotation et en maintien sous pression, de sorte que la ou les garnitures, assurant la fonction d'étanchéité tournante, subissent des contraintes importantes incompatibles avec un service fiable et de longue durée.

Une autre proposition de la technique antérieure, fournie par le brevet **FR 2 598 771 (86-07 029)**, concerne une valve pneumatique pilotée à distance et qui est constituée par deux corps de gonflage et de dégonflage délimitant deux cavités, dites respectivement d'admission et d'échappement, communiquant entre elles par une intercommunication qui forme, dans les deux chambres, deux siéges pour deux clapets asservis.

L'intercommunication est en relation entre les deux sièges avec un canal de liaison aboutissant à un puits de raccordement avec la capacité. La chambre d'admission est en relation avec un puits de raccordement et une installation de pilotage, alors que la chambre d'échappement est en relation avec le milieu ambiant par des trous de mise à air libre.

Une telle valve donne satisfaction mais représente un appareil onéreux de fabrication, d'un encombrement certain, qui ne se prête pas convenablement à un montage intégré sur une roue de véhicule.

La technique antérieure connaît aussi, par le brevet **FR 2 616 194 (87-07 772),** une autre proposition concernant une valve pneumatique dont le corps délimite une cavité qui est divisée par une membrane souple en deux chambres, respectivement dite de pilotage et d'échappement qui communiquent, pour la première, avec un circuit de mise en pression ou en dépression relative et, pour la seconde, avec un alésage placé en relation permanente avec la capacité. La seconde chambre communiqué, par ailleurs, avec au moins un conduit d'échappement débouchant à l'extérieur de la cavité.

Une telle valve comporte, par ailleurs, un système à clapet, à même de fermer ou d'ouvrir le passage entre, d'une part, l'alésage et le conduit d'échappement.

Pour fonctionner convenablement, une telle valve pneumatique comprend, par ailleurs, entre la source ou le circuit de mise en pression ou en dépression et la capacité, un puits contrôlé par un clapet anti-retour dans le sens capacité-circuit.

Une telle valve peut être considérée comme répondant, de façon satisfaisante, à la fonction recherchée, ainsi qu'à l'encombrement d'adaptation ou de montage.

Toutefois, le fonctionnement d'une telle valve implique de disposer d'un circuit de mise en pression pour assurer le gonflage de la capacité et d'un appareillage de mise en dépression pour obtenir une phase de dégonflage.

Deux branchements sont donc à considérer, ainsi que deux ensembles fonctionnels équipés de joints tournants à double effet (pression et dépression), pour piloter à distance le double fonctionnement de la valve.

La présente invention vise à remédier à un tel inconvénient en proposant des perfectionnements permettant de réaliser une valve ou un dispositif pneumatique piloté de gonflage-dégonflage automatique, de réalisation simple et peu onéreuse, d'un fonctionnement fiable, d'une grande robustesse et dont le pilotage peut intervenir, en phase de gonflage ou en phase de dégonflage, à partir du même circuit de fourniture d'un fluide de pilotage et de gonflage sous pression.

Pour atteindre les objectifs ci-dessus, le dispositif pneumatique piloté selon l'invention est caractérisé en ce que :
- le siège est présenté par la membrane dans la chambre de pilotage,
- le clapet de gonflage et le clapet d'échappement sont montés en opposition, de part et d'autre de la membrane et sont sensibles à la position de celle-ci, de manière à former un équipage mobile de deux clapets asservis à la membrane,
- et les moyens élastiques sont associés à la membrane,
et en ce qu'il est prévu une butée limitant la course de l'équipage en ouverture du clapet d'échappement.

L'invention a encore pour objet une installation de commande à distance du gonflage et du dégonflage d'une capacité, caractérisée en ce qu'elle comprend un dispositif selon l'invention et :
- un circuit de fourniture, à partir d'une source, de fluide sous pression raccordé à la chambre de pilotage et muni d'un robinet d'isolement,
- une dérivation en bouclé montée sur le circuit, de part et d'autre du robinet et comprenant un robinet d'isolement en amont d'un détendeur, lui-même situé en amont du raccordement de la dérivation au circuit,
- une ligne de purge munie d'un robinet d'isolement, piquée sur le circuit en aval du robinet,
- et un manomètre placé entre le dispositif et le robinet.

Diverses autres caractéristiques ressortent de la description faite ci-dessous en référence aux dessins annexés qui montrent, à titre d'exemples non limitatifs, des formes de réalisation de L'objet de l'invention.

La **fig. 1** est une vue schématique d'un exemple d'application de l'objet de l'invention.

La **fig. 2** est une coupe-élévation montrant plus en détail, à plus grande échelle, le dispositif de l'invention.

Les **fig. 3** et **4** sont des coupes illustrant, à plus petite échelle, deux phases particulières de fonctionnement.

La **fig. 5** est une coupe-élévation, analogue aux **fig. 3** et **4**, illustrant une variante de réalisation.

La **fig. 6** est une coupe-élévation schématique montrant un autre développement de l'un des moyens techniques selon l'invention.

La **fig. 7** est une coupe-élévation schématique partielle d'une variante de réalisation.

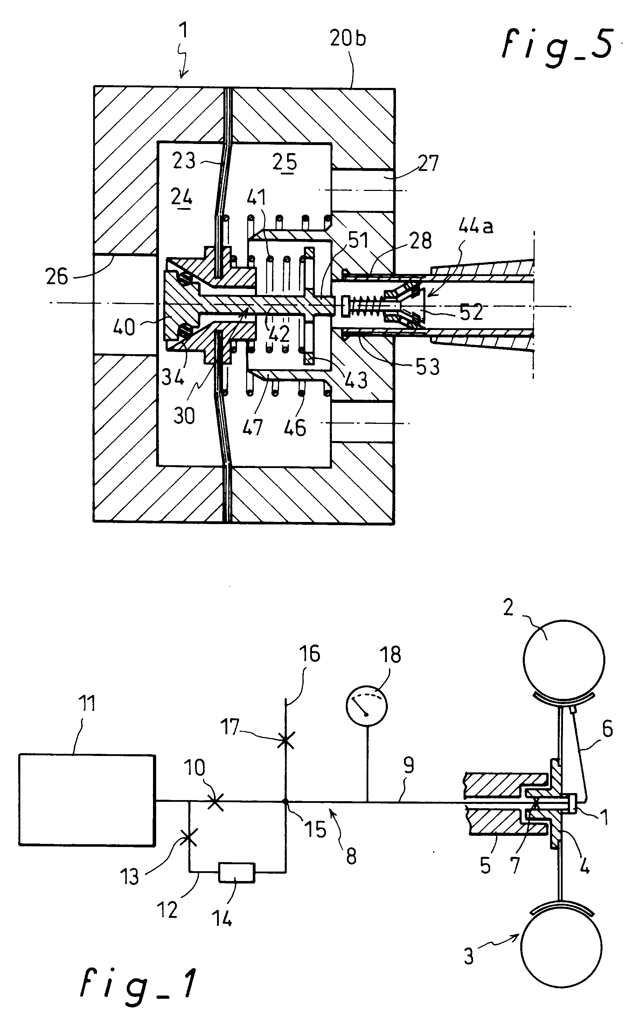

La **fig. 1** illustre un exemple d'application préférée du dispositif pneumatique piloté selon l'invention. Dans cet exemple, le dispositif, désigné dans son ensemble par la référence **1**, est appliqué au contrôle de la pression du pneumatique **2** d'une roue **3** montée, par un moyeu **4**, sur un axe de roulement ou fusée **5**. La roue **3** peut correspondre, indifféremment, à un train moteur ou porteur et/ou directeur avant ou arrière d'un véhicule.

Dans cette application, le dispositif **1** est adapté sur le moyeu **4** pour être relié, par une canalisation **6**, au pneumatique **2** qui constitue une capacité de confinement d'un fluide gazeux, généralement de l'air comprimé. Le dispositif **1** est également relié, par un joint tournant **7**, à une installation de pilotage **8** comprenant un circuit **9** susceptible d'être mis en relation, par l'intermédiaire d'un robinet d'isolement **10**, avec une source **11** de fourniture d'un fluide comprimé, tel que de l'air.

Le circuit **9** comprend, entre la source **11** et le robinet **10**, une dérivation **12** en bouclé, raccordée audit circuit en aval du robinet **10**. La dérivation **12** comporte un robinet d'isolement **13** disposé en amont d'un détendeur **14** placé également en amont du point de raccordement **15**, entre la dérivation **12** et le circuit **9**.

Une ligne de purge **16**, pourvue d'un robinet d'isolement **17**, est également adaptée sur le circuit **9**, en amont d'un manomètre de contrôle **18**.

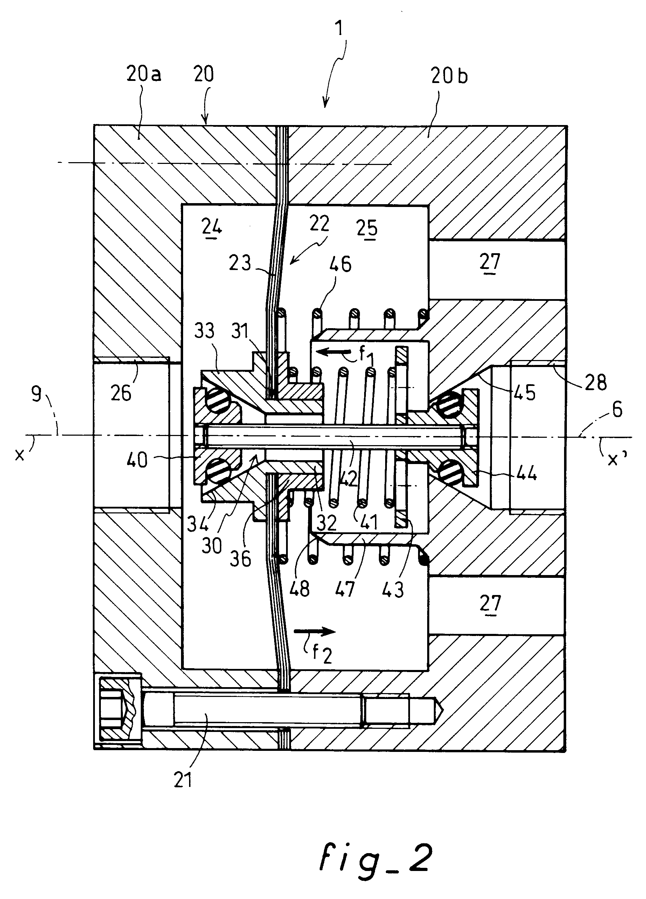

Le dispositif **1** comprend, selon la fig. **2**, un corps **20** constitué par deux demi-corps **20a** et **20b** qui sont assemblés par tous moyens convenables, tels que des vis **21**. Les demi-corps **20a** et **20b** délimitent ensemble une cavité **22** qui est divisée, par une membrane d'étanchéité **23** pincée par les demi-corps **20a** et **20b**, en deux chambres **24** et **25** dites, respectivement, de pilotage et d'échappement. La chambre **24** communique, par un puits **26**, avec le circuit **9**, tandis que la chambre **25** communique avec le milieu ambiant par des conduits d'échappement **27**. La chambre **25** est, par ailleurs, en relation, par un puits **28**, avec la canalisation **6** menant à la capacité **2**.

De préférence, le dispositif **1** est réalisé de manière à se présenter sous la forme d'un corps de révolution délimitant une cavité **22**, de type cylindrique, et comportant des puits **26** et **28** qui se trouvent disposés coaxialement, de préférence sur l'axe de révolution **x-x′** du corps **20**.

Bien que cela ne soit pas représenté, le corps **20** peut comporter des moyens d'adaptation sur le moyeu **4**, de tels moyens pouvant être constitués par des oreilles de fixation formées par l'un des demi-corps **20a** ou **20b** indifféremment.

Le dispositif comprend, par ailleurs, un système à clapets **30** constitué par un équipage mobile porté par la membrane **23** qui est, à cet effet, pourvue, sur l'axe **x-x′**, d'une ouverture centrale traversée par le col tubulaire décolleté **32** d'une bague **33** présentant, dans cet exemple, un siège tronconique **34** aboutissant au col **32**. La bague **33** est montée avec étanchéité sur la membrane **31** par tout moyen convenable et, par exemple, par une contre-bague **36** enfilée sur le col **32** pour pincer, avec étanchéité, la membrane **23**. La liaison entre la contre-bague **36** et le col **32** peut être assurée de toute façon appropriée, par collage, sertissage, vissage, etc, choisie en fonction de la matière constitutive de la bague **33** et de la contre-bague **36**. Le siège tronconique **34** est exécuté de manière que la petite base se raccorde au col **32**, alors que la grande base se trouve orientée en direction du puits **26**.

Le système à clapets **30** comprend un clapet **40**, dit de gonflage, destiné à coopérer avec étanchéité avec le siège **34**. Selon une forme de réalisation appropriée, le clapet **40** est prolongé par une tige **42** à l'intérieur du col **32** et pourvue, au-delà dudit col, d'un arrêt **43** solidaire axialement de la tige **42** et sur lequel prend appui un organe élastique **41** tendant à solliciter le clapet **40** en position de fermeture du siège **34**. L'organe **41** est, par exemple, constitué par un ressort hélicoïdal monté sous compression entre l'arrêt **43** et la contre-bague **36**.

Le système à clapets **30** comprend, par ailleurs, un second clapet **44** monté en bout de la tige **42** en opposition du clapet **40**. Le clapet **44**, dit d'échappement, est destiné à coopérer avec étanchéité avec un siège **45** formé, en opposition du siège **34**, par le puits **28**, concentriquement à l'axe **x-x′**. Le clapet **44** est sollicité en position de fermeture du siège **45** par l'intermédiaire d'un moyen élastique **46** agissant sur la membrane **23**, de manière à la déplacer dans le sens pour lequel elle entraîne le système à clapets **30** dans le sens de la flèche **f₁** pour maintenir une coopération constante entre le clapet **44** et le siège **45**.

Le moyen élastique **46** est, de préférence, choisi de manière à exercer une force élastique inférieure à celle développée par le moyen **41**. Le moyen **46** est, avantageusement, constitué par un ressort hélicoïdal monté sous compression entre la membrane **23** et le demi-corps **20b** qui forme, intérieurement à la chambre **25** et concentriquement à l'axe **x-x′**, un rebord cylindrique **47**, entouré extérieurement par le ressort **46** et présentant, par son extrémité, un siège d'appui **48** situé à distance de la membrane **23** dans la position stable de cette dernière conférée par l'action simultanée des ressorts **41** et **46**. Le rebord cylindrique **47** délimite une enveloppe de transfert entre le siège **45** et la chambre **25**, enveloppe dans laquelle se trouve disposée la queue **42** et le ressort **41**.

Dans la position stable ci-dessus, telle qu'illustrée par la **fig. 2**, le clapet **40** ferme le siège **34** par l'action de l'organe élastique **41**, alors que la membrane **23**, porteuse du système à clapets **30**, est sollicitée par le ressort **46** dans le sens de la flèche **f₁** pour amener le clapet **44** en fermeture du siège **45**.

Le dispositif établit, dans cette position, une fermeture étanche entre la capacité **2** et le circuit **9** dans lequel ne règne aucune pression, dès lors que les robinets d'isolement **10** et **13** sont fermés et que le robinet d'isolement **17** est, par exemple, ouvert.

Lorsqu'il s'agit de dégonfler la capacité **2**, le robinet **17** est fermé, de même que le robinet **10**. Par contre, le robinet **13** est ouvert, de sorte que du fluide comprimé sous pression minimale par passage dans le détendeur **14**, est fourni au circuit **9** pour être délivré dans la chambre de pilotage **24**. Le fluide sous pression repousse la membrane **23** contre l'action de l'organe élastique **46**. Le déplacement de la membrane **23** dans le sens de la flèche **f₂** entraîne, dans le même sens, le système à clapets **30** dont le ressort **41** maintient le clapet **40** en position de fermeture du siège **34**.

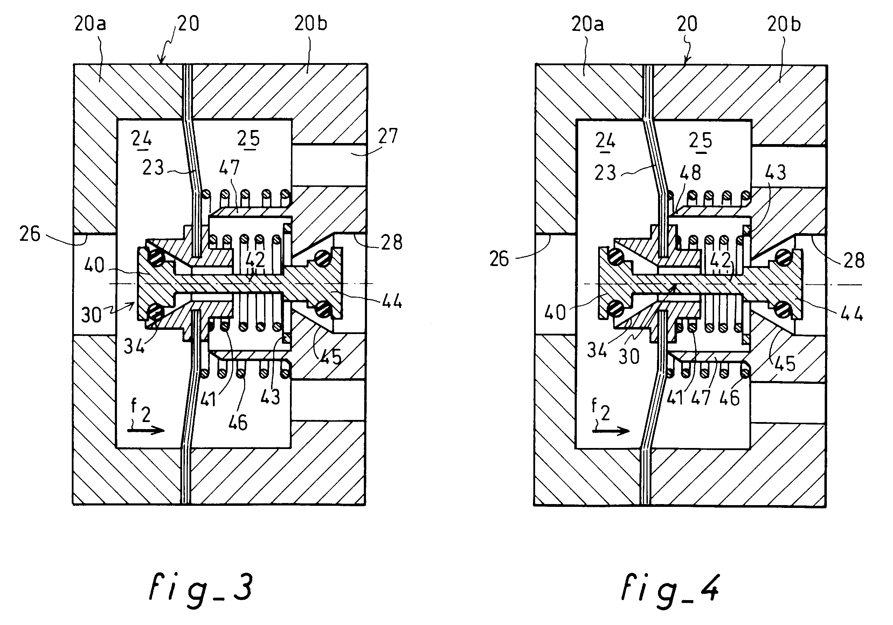

Le déplacement dans le sens de la flèche **f₂** s'effectue jusque dans une position de butée déterminée par l'arrêt **43** amené à prendre appui contre le demi-corps **20b**, comme représenté à la **fig. 3**. La position axiale de l'arrêt **43** sur la queue **42** est choisie pour que, sous l'action du fluide occupant la chambre de pilotage **24**, la position d'arrêt corresponde à un état stable dans lequel la membrane **23** ne coopère pas avec le siège d'appui **48**. Cet état stable résulte du choix de la précontrainte initiale du ressort **41**, choisie pour équilibrer, dans cette position, la force développée par le fluide sous pression minimale agissant sur la surface de la membrane **23**.

Ainsi, tel que cela ressort de la **fig. 3**, le puits **28**, et par conséquent la canalisation **6** et la capacité **2**, sont placés en relation, par l'ouverture du clapet d'échappement **44**, avec la chambre **25** qui communiqué avec les conduits d'échappement **27**. Du fluide sous pression, issu de la capacité **2**, peut donc s'échapper vers le milieu ambiant et provoquer le dégonflage de cette capacité, tant que le fluide sous pression minimale fourni par l'installation **8** agit dans la chambre de pilotage **24**.

Lorsque la phase de dégonflage doit être interrompue, le robinet d'isolement **13** est fermé, alors que le robinet **17** est ouvert, de manière à purger le circuit **9** pour faire chuter la pression dans la chambre de pilotage **24** et ramener le système à clapets dans la position selon la **fig. 2**, par l'action du ressort **46** agissant sur la membrane **23** portant le système.

Lorsqu'il s'agit de gonfler la capacité **2**, le robinet **17** est fermé, de même que le robinet **13**, alors que le robinet **10** est ouvert de manière à faire régner, dans la chambre **24**, la pression maximale du fluide délivré par la source **11**. Un début de fonctionnement, identique à ce qui est décrit précédemment, intervient jusqu'à l'amenée en appui de l'arrêt **43** contre le demi-corps **20b** limitant la course de déplacement du système à clapet **30**.

Dans cet état intermédiaire, qui est représenté à la **fig. 3**, la pression maximale du fluide délivré par la source **11** contraint la membrane **23** à un déplacement plus important dans le sens de la flèche **f₂**, contre l'action de l'organe **46**. Dans cette phase, le système à clapets **30** est immobilisé, de sorte que seule la membrane **23** poursuit son déplacement dans le sens de la flèche **f₂**, avec mise sous contrainte simultanée des ressorts **46** et **41**.

Ce déplacement entraîne l'éloignement relatif du siège **34** par rapport au clapet **40** jusque dans une position stable dans laquelle la membrane **23** coopère avec le siège d'appui **48**. Dans cet état, illustré par la **fig. 4**, la membrane **23** ferme la communication entre le puits **28** et la chambre **25,** alors que l'ouverture du clapet **40** par rapport au siège **34** établit la communication entre la chambre de pilotage **24** et le puits **28**. De la sorte, du fluide sous pression maximale passe de la chambre **24** à travers le siège **34** et le col **32**, à l'intérieur du volume de transfert que définit le rebord cylindrique **47** pour suivre le siège **45** ouvert et emprunter le puits **28** menant, par la canalisation **6**, à la capacité **2**.

La pression de gonflage de la capacité **2** peut être mesurée avec précision à partir de la phase de gonflage, comme ci-dessus. En effet, il suffit, dans l'état selon la **fig. 4**, de fermer le robinet **10** pour que la pression s'équilibre entre la capacité **2** et l'installation **8**. La pression équilibrée est fournie par le manomètre **18**.

Pour interrompre la phase de gonflage, il suffit de fermer le robinet **10** puis d'ouvrir le robinet **17**, de manière que l'action conjuguée des ressorts **41** et **46** repousse la membrane **23** dans sa position d'origine selon un déplacement dans le sens inverse de la flèche **f₂** dans lequel elle ramène le système à clapets **30** dans la position de fermeture simultanée des sièges **34** et **45**.

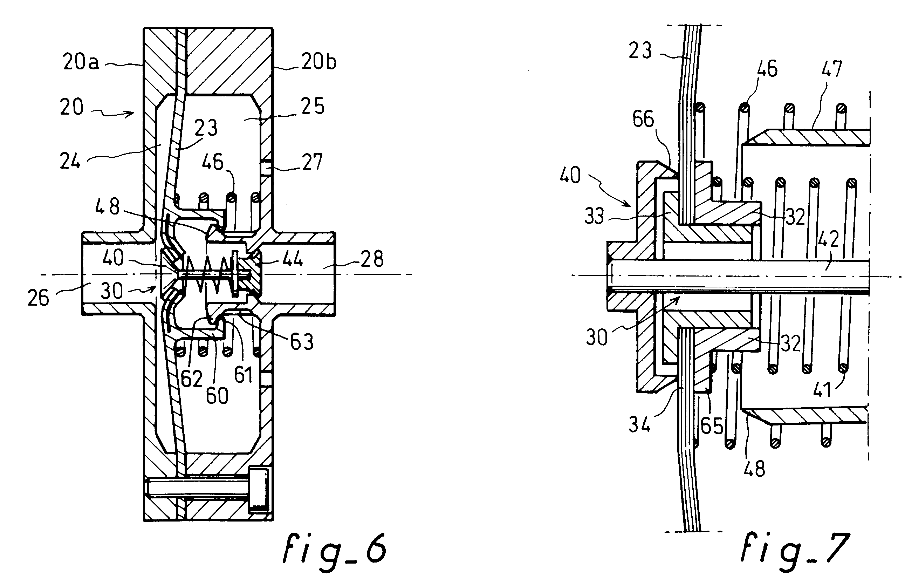

La **fig. 5** montre une variante de réalisation dans laquelle le système à clapets **30** comporte un clapet d'échappement **44a** qui est scindé par rapport au système unitaire à deux clapets en opposition, tel que décrit en référence à la **fig. 2**.

Dans un tel exemple de réalisation, le système à clapets **30** comporte toujours la tige **42** portant le clapet de gonflage **40** et l'arrêt **43** contre lequel le ressort **41** prend appui. Par contre, l'extrémité de la tige **42**, opposée au clapet **40**, est constituée sous la forme d'un doigt **51** destiné à coopérer avec l'obturateur **52** asservi élastiquement d'une valve de gonflage **53** appartenant à la capacité **2**. Dans un tel cas, la canalisation **6** est supprimée et le dispositif est adapté, par exemple, directement sur la jante de la roue avec liaison entre le puits **28** et l'embout de valve **53**.

Un fonctionnement, semblable à celui décrit ci-dessus, intervient dans les phases de gonflage et de dégonflage.

La **fig. 6** montre une variante de réalisation dans laquelle il est prévu de faire porter à la membrane **23** ou, encore, à la contre-bague **36**, une jupe **60** à même de coopérer, par une lèvre d'étanchéité **61**, avec un épaulement **62** formé par le rebord **47** qui comporte des saignées axiales **63** permettant de faire communiquer le puits **28** avec la chambre **25** dans une position de dégonflage du type de la **fig. 3**.

De cette façon, le système à clapets est préservé de toute introduction de particules, de produits ou de gaz à caractère agressif susceptibles de le détruire partiellement ou d'anihiler les fonctions de fermeture étanche entre les clapets et les sièges. La jupe **60** est réalisée, dans tous les cas, de manière à présenter une longueur axiale qui est inférieure au déplacement maximal de la membrane **23**, afin que cette dernière puisse être amenée à coopérer avec le siège **48**.

Une variante de réalisation est représentée à la **fig. 7**, selon laquelle le siège **34** n'est plus formé par la bague **33**, mais directement par la surface de la membrane entourant ladite bague et recouvrant une collerette **65** de la contre-bague **36**. Le clapet **40**, toujours solidaire de la tige **42**, comporte une nervure annulaire saillante **66** destinée à coopérer directement avec la membrane **23** pour assurer la fermeture étanche dans les positions selon les **fig. 2** et **3**.

## Revendications

1. Dispositif pneumatique piloté de gonflage-dégonflage automatique et de mesure de pression d'une capacité (**2**) de confinement d'un fluide gazeux sous pression relative, du type comprenant, d'une part, une cavité (**22**) divisée par une membrane souple (**23**) en deux chambres dites de pilotage (**24**) et d'échappement (**25**) communiquant, pour la première, avec un circuit (**8**) de mise en pression relative et, pour la seconde, avec un alésage (**28**) en relation avec la capacité, et avec au moins un conduit d'échappement (**27**) débouchant à l'extérieur de la cavité et, d'autre part, un système à clapet (**30**) à même de fermer ou d'ouvrir le passage au moins entre l'alésage et le conduit d'échappement et comprenant :
- un siège (**34**) prévu pour coopérer avec un clapet de gonflage (**40**),
- un siège (**45**) en relation avec l'alésage (**28**) et prévu pour coopérer avec un clapet d'échappement (**44**),
- un organe élastique (**41**) tendant à maintenir le clapet de gonflage (**40**) en position fermée sur le siège (**34**),
- des moyens élastiques (**46**) tendant à maintenir le clapet d'échappement (**44**) en position de fermeture du siège (**45**), caractérisé en ce que :
- le siège (**34**) est présenté par la membrane (**23**) dans la chambre de pilotage (**24**),
- le clapet de gonflage (**30**) et le clapet d'échappement (**44**) sont montés en opposition, de part et d'autre de la membrane (**23**) et sont sensibles à la position de celle-ci, de manière à former un équipage mobile de deux clapets asservis à la membrane (**23**),
- et les moyens élastiques (**46**) sont associés à la membrane (**23**),
et en ce qu'il est prévu une butée (**43**) limitant la course de l'équipage en ouverture du clapet d'échappement (**44**).

2. Dispositif selon la revendication 1, caractérisé en ce que le clapet d'échappement (**44**) fait partie intégrante du systéme à clapets (**30**).

3. Dispositif selon la revendication 1, caractérisé en ce que le clapet d'échappement (**44a**) est scindé du système à clapets et se trouve constitué par l'obturateur (**52**) asservi élastiquement en position de fermeture, de la valve (**53**) de gonflage de la capacité (**2**).

4. Dispositif selon l'une des revendications 1 à 3, caractérisé en ce que le clapet de gonflage (**40**) coopère avec un siège (**34**) présenté par une bague (**33**) traversant la membrane (**23**).

5. Dispositif selon l'une des revendications 1 à 3, caractérisé en ce que le clapet de gonflage (**40**) coopère par une nervure annulaire (**66**) qu'il forme directement en appui avec le siège (**40**) qui est constitué par la membrane (**23**).

6. Dispositif selon l'une des revendications 1 à 5, caractérisé en ce que l'équipage mobile (**30**) est entouré concentriquement, à distance, par un rebord cylindrique (**47**) formé par le corps de la cavité et s'étendant dans la chambre d'échappement (**25**) et dont le bord transversal extrême constitue un siège d'appui (**48**) pour la membrane (**23**) dans la position pour laquelle les deux clapets (**40**, **44**) sont ouverts et ladite membrane ferme la communication entre l'alésage (**28**) et le conduit d'échappement (**27**) par la chambre d'échappement (**25**).

7. Dispositif selon la revendication 6, caractérisé en ce que l'équipage mobile (**30**) est constitué par une tige rigide (**42**) dont les parties terminales portent des garnitures d'étanchéité destinées à coopérer avec les sièges.

8. Dispositif selon l'une des revendications 1 à 7, caractérisé en ce que la membrane (**23**) comporte une jupe (**60**) entourant, par une lèvre d'étanchéité (**61**), le rebord cylindrique (**47**) qui comporte un épaulement extrême d'appui de la lèvre en position stable et des saignées axiales (**63**) de communication entre le puits (**28**) et la chambre (**25**) en position de dégonflage de la membrane.

9. Installation de commande à distance du gonflage et du dégonflage d'une capacité, caractérisée en ce qu'elle comprend :
- un dispositif selon l'une des revendications 1 à 8,
- un circuit (**8**) de fourniture, à partir d'une source (**11**), de fluide sous pression raccordé à la chambre de pilotage (**24**) et muni d'un robinet d'isolement (**10**),
- une dérivation en boucle (**12**) montée sur le circuit, de part et d'autre du robinet (**10**) et comprenant un robinet d'isolement (**13**) en amont d'un détendeur (**14**), lui-même situé en amont du raccordement de la dérivation au circuit,
- une ligne de purge (**16**) munie d'un robinet d'isolement (**17**), piquée sur le circuit en aval du robinet (**10**),
- et un manomètre (**18**) placé entre le dispositif et le robinet (**10**).

10. Application de l'installation selon la revendication 9 au gonflage-dégonflage d'une roue d'un véhicule dans le moyeu de laquelle est disposé le dispositif qui est raccordé au circuit par un joint tournant (**7**).

## Claims

1. Controlled pneumatic device for the automatic inflating-deflating and measurement of pressure in a closed volume (2) containing a gaseous fluid under relative pressure, of the type comprising, on the one hand, a cavity (22) divided by a supple membrane (23) into two so-called control (24) and exhaust (25) chambers which communicate, the first chamber, with a circuit (8) for creating a relative pressure and, the second chamber, with a bore (28) communicating with the closed volume, and with at least one exhaust pipe (27) issuing outside the cavity and, on the other hand, a valve system (30) capable of closing or opening the passage at least between the bore and the exhaust pipe and comprising:
- a seat (34) provided for cooperating with an inflating valve (40),
- a seat (45) communicating with the bore (28) and provided for cooperating with an exhaust valve (44),
- an elastic member (41) tending to hold the inflating valve (40) in closed position on the seat (34),
- elastic means (46) tending to hold the exhaust valve (44) in the position in which the seat (45) is closed,
characterized in that :
- the seat (34) is provided on the membrane (23) in the control chamber (24),
- the inflating valve (30) and the exhaust valve (44) are mounted in opposite relationship, on either side of the membrane (23) and are susceptible to the position of the latter, so as to form a mobile system of two valves controlled by the membrane (23), and
- the elastic means (46) are operationally-coupled to the membrane (23),
and in that an abutment (43) is provided to limit the stroke of the system to the opening of the exhaust valve (44).

2. Device according to claim 1, characterized in that the exhaust valve (44) is an integral part of the valve system (30).

3. Device according to claim 1, characterized in that the exhaust valve (44a) is cut off from the valve system and is constituted by the shutter (52) which is elastically controlled in closure postion, of the inflating valve (53) of the closed volume (2).

4. Device according to one of claims 1 to 3, characterized in that the inflating valve (40) cooperates with a seat (34) provided on a ring (33) traversing the membrane (23).

5. Device according to one of claims 1 to 3, characterized in that the inflating valve (40) cooperates via an annular rib (66) formed directly thereon with the seat (40) which is constituted by the membrane (23).

6. Device according to one of claims 1 to 5, characterized in that the mobile system (30) is concentrically and remotely surrounded by a cylindrical flange (47) formed by the cavity body and extending inside the exhaust chamber (25) and of which the outermost transversal edge constitutes a bearing seat (48) for the membrane (23) in the position for which the two valves (40, 44) are open and said membrane closes the communication between the bore (28) and the exhaust pipe (27) through the exhaust chamber (25).

7. Device according to claim 6, characterized in that the mobile system (30) is constituted by a rigid rod (42) of which the end portions carry seals designed to cooperate with the seats.

8. Device according to one of claims 1 to 7, characterized in that the membrane (23) comprises a skirt (60) surrounding, via a sealing lip (61), the cylindrical flange (47) which comprises an outermost shoulder for the lip to bear thereon in stable position and axial grooves (63) creating a communication between the well (28) and the chamber (25) in the membrane deflating position.

9. Installation for remotely-controlling the inflating and deflating of a closed volume, characterized in that it comprises :
- a device according to any one of claims 1 to 8,
- a supply circuit (8), supplying fluid under pressure from a source (11), which circuit is connected to the control chamber (24) and provided with an isolating valve (10),
- a looped branch pipe (12) mounted on the circuit, on either side of the valve (10) and comprising an isolating valve (13) upstream of a pressure reducing valve (14), which is itself situated upstream of the connection between the branch pipe and the circuit,
- a draining line (16) equipped with an isolating valve (17) entering the circuit downstream of the valve (10), and
- a pressure gauge (18) placed between the device and the valve (10).

10. Application of the installation according to claim 9 to the inflating-deflating of a vehicle wheel in the hub of which is disposed the device which is connected to the circuit via a revolving joint (7).

## Patentansprüche

1. Gesteuerte Druckluftvorrichtung zum automatischen Aufpumpen-Luftablassen und Druckmessen eines geschlossenen Druckraums (2) mit einem gasförmigen Fluid unter Relativdruck, die einerseits einen Hohlraum (22) umfaßt, der durch eine biegsame Membran (23) in zwei Kammern geteilt ist, nämlich die Steuerkammer (24) und die Auslaßkammer (25), von denen erstere mit einem Kreislauf (8) zum Unter-relativen-Druck-Setzen und zweitere mit einer Bohrung (28) in Verbindung zu dem Druckraum und mit mindestens einer von dem Hohlraum nach außen mündenden Ablaßleitung (27) in Verbindung steht, und andererseits ein Ventilsystem (30) umfaßt, das geeignet ist, den Durchlaß mindestens zwischen der Bohrung und der Ablaßleitung zu verschließen oder zu öffnen, bestehend aus:
- einem Sitz (34), der dazu vorgesehen ist, mit einem Aufpumpventil (40) zusammenzuwirken,
- einem Sitz (45) in Verbindung mit der Bohrung (28), der dazu vorgesehen ist, mit einem Ablaßventil (44) zusammenzuwirken,
- einem elastischen Organ (41), das die Tendenz hat, das Aufpumpventil (40) an dem Sitz (34) in Schließstellung zu halten,
- elastischen Mitteln (46), die die Tendenz haben, das Ablaßventil (44) an dem Sitz (45) in Schließstellung zu halten,
dadurch gekennzeichnet, daß :
- der Sitz (34) sich an der Membran (23) in der Steuerkammer (24) befindet.
- das Aufpumpventil (40) und das Ablaßventil (44) einander gegenüberliegend zu beiden Seiten der Membran (23) angebracht sind und sensibel gegenüber deren Stellung sind, so daß eine bewegliche Anordnung von zwei von der Membran (23) gesteuerten Ventilen entsteht, und
- die elastischen Mittel (46) mit der Membran (23) verbunden sind,
und daß ein Anschlag (43) vorgesehen ist, der den Hub der Anordnung bei Öffnen des Ablaßventils (44) begrenzt.

2. Vorrichtung nach Anspruch 1,
dadurch gekennzeichnet, daß das Ablaßventil (44) einen integrierenden Bestandteil des Ventilsystems (30) bildet.

3. Vorrichtung nach Anspruch 1,
dadurch gekennzeichnet, daß das Ablaßventil (44a) von dem Ventilsystem abgetrennt ist und von dem Verschluß (52) gebildet wird, der federnd in Schließstellung des Aufpumpventils (53) des Druckraums (2) gesteuert wird.

4. Vorrichtung nach einem der Ansprüche 1 bis 3,
dadurch gekennzeichnet, daß das Aufpumpventil (40) mit einem Sitz (34) zusammenwirkt, der sich an einem Ring (33) befindet, der durch die Membran (23) verläuft.

5. Vorrichtung nach einem der Ansprüche 1 bis 3,
dadurch gekennzeichnet, daß das Aufpumpventil (40) über eine von ihm gebildete ringförmige Rippe (66) direkt in Anlage mit dem Sitz (40) zusammenwirkt, der von der Membran (23) gebildet wird.

6. Vorrichtung nach einem der Ansprüche 1 bis 5,
dadurch gekennzeichnet, daß die bewegliche Anordnung (30) mit einem Abstand konzentrisch von einem zylindrischen Ring (47) umgeben ist, der von dem Körper des Hohlraums gebildet wird und sich in die Ablaßkammer (25) erstreckt, und dessen quer verlaufende Endkante einen Anlagesitz (48) für die Membran (23) in der Stellung bildet, bei der die beiden Ventile (40, 44) geöffnet sind und die genannte Membran die Verbindung zwischen der Bohrung (28) und der Ablaßleitung (27) durch die Ablaßkammer (25) schließt.

7. Vorrichtung nach Anspruch 1,
dadurch gekennzeichnet, daß die bewegliche Anordnung (30) aus einer starren Stange (42) besteht, deren Endabschnitte Dichtungen tragen, die dazu gedacht sind, mit den Sitzen zusammenzuwirken.

8. Vorrichtung nach einem der Ansprüche 1 bis 7,
dadurch gekennzeichnet, daß die Membran (23) ein zylindrisches Ansatzteil (60) aufweist, das mit einer Dichtungslippe (61) den zylindrischen Ring (47) umgibt, welcher eine Endschulter zur Anlage der Lippe in stabiler Stellung sowie axiale Verbindungsspalts (63) zwischen der Bohrung (28) und der Ablaßkammer (25) bei Ablaßstellung der Membran aufweist.

9. Fernsteuereinrichtung für das Aufpumpen und Luftablassen eines Druckraums,
dadurch gekennzeichnet, daß sie umfaßt :
- eine Vorrichtung nach einem der Ansprüche 1 bis 8,
- einen Versorgungskreislauf (8) zur Zuführung von unter Druck stehendem Fluid von einer Quelle (11), der an die Steuerkammer (24) angeschlossen ist und mit einem Absperrventil (10) versehen ist,
- eine ringförmige Abzweigung (12), die vor und hinter dem Absperrventil (10) an dem Kreislauf angebracht ist und ein Absperrventil (13) vor einem Druckminderventil (14) aufweist, das sich seinerseits vor dem Anschluß der Abzweigung an den Kreislauf befindet,
- eine Ablaßleitung (16) mit einem Absperrventil (17), die hinter dem Absperrventil (10) an dem Kreislauf angeschlossen ist,
- und ein Manometer (18), das zwischen der Vorrichtung und dem Absperrventil (10) angeordnet ist.

10. Anwendnug der Einrichtung nach Anspruch 9 zum Aufpumpen-Luftsblassen an einem Fahrzeugreifen, in dessen Nabe die Vorrichtung angeordnet ist, die mit einer Drehverbindung (7) an den Kreislauf angeschlossen ist.
